# EUROPEAN PATENT SPECIFICATION

(11) **EP 4 157 670 B1**
(45) Date of publication and mention of the grant of the patent: **02.07.2025**
(21) Application number: 21732815.2
(22) Date of filing: 29.05.2021
(51) Int. Cl.: B60L 53/80, B65G 54/02

(54) **A STORAGE SYSTEM FOR STORING STACKS OF BOARDS, FOR USE IN FACTORIES FABRICATING BOARDS**
LAGERSYSTEM ZUM LAGERN VON PLATTENSTAPELN ZUR VERWENDUNG IN FABRIKEN ZUR HERSTELLUNG VON PLATTEN
SYSTÈME DE STOCKAGE POUR STOCKER DES PILES DE PANNEAUX, DESTINÉ À ÊTRE UTILISÉ DANS DES USINES DE FABRICATION DE PANNEAUX

(30) Priority: 29.05.2020 FI 20205560
(43) Date of publication of application: 05.04.2023
(73) Proprietor: Dieffenbacher Panelboard Oy, 15560 Nastola (FI)
(72) Inventor: MÄNNIKKÖ, Ari, 15560 Nastola (FI)
(74) Representative: Hartdegen, Helmut
(86) International application number: PCT/EP2021/064466
(87) International publication number: WO 2021/240009

(56) References cited:
- WO-A1-2019/225234
- CN-A- 108 706 266
- JP-A- H10 194 409
- US-A1- 2018 222 676
- US-A1- 2019 352 093

## Description

### OBJECT OF THE INVENTION

The object of the present invention is a storage system for storing stacks of boards, for use in factories fabricating particle boards, OSB boards and MDF boards, the storage system comprising at least one main wagon moving in a crosswise direction and at least one pair of satellite wagons travelling lengthwise, the satellite wagons of which satellite wagon pair are arranged to move side by side and to carry the board stacks from below, and comprising storage rows that comprise three longitudinal supports, from which or onto which storage rows the board stacks are transferred.

Generally speaking, wood-based boards manufactured on a continuous-action press line are stored for a certain time in intermediate storage before the downstream work phases, such as sanding and sawing.

### BACKGROUND OF THE INVENTION

The typical mass of large stacks in factories fabricating particle boards, OSB boards and MDF boards is 40-80 tons. The typical stack height is 3-5 m, width 1.8-3.6 m and length 5-9 m. The stacks in the storage system that is the object of the invention are transported on two wagons running on rails under the stack in the longitudinal direction of the storage, which wagons transfer the stack to rows of the storage resting on three longitudinal supports. These wagons moving in the longitudinal direction are hereinafter called satellite wagons and they always operate in pairs. The transfer of stacks to a storage row and the fetching of stacks from a storage row occurs in such a way that a satellite wagon pair lifts a stack from the bottom surface of the stack, such that the stack detaches from its longitudinal supports, and transports the stack to a storage row and lowers the stack onto the longitudinal supports in the storage or, when fetching from the storage, onto the supports on the main wagon. The moving of a satellite wagon pair in a crosswise direction, i.e. from one longitudinal row to another longitudinal row, occurs by driving the satellite wagon pair onto the main wagon, which then transports the satellite wagon pair to the next worksite, i.e. to some other longitudinal row.

Storing systems with apparent resemblances are already known in the state of the art and exemplary shown with JPH10194409A, CN108706266A, WO2019225234A1, US2019/352093A1 or US2018/222676A1.

The current supply of a satellite wagon pair is arranged by means of a cable reel. In other words, there is a cable reel on the satellite wagon, from which cable is unwound as the satellite wagon pair draws away from the main wagon. Correspondingly, cable is wound back onto the cable reel when the satellite wagon pair approaches the main wagon. This arrangement, however, requires the main wagon to be at the same point of the longitudinal row during the work phase of the satellite wagon pair so that the cable can be unwound from the reel. Since the main wagon must be at the point of the row of the satellite wagon pair, it cannot perform another work phase of its own during the work phase of the satellite wagon pair, but instead must await the return of the satellite wagon pair.

The aim of the present invention is to provide a new type of storage system for large stacks, wherein a satellite wagon pair or satellite wagon pairs transporting a stack can function independently on the longitudinal rows of the storage in such a way that they are not in physical contact with the main wagon moving crosswise, and wherein the main wagon can perform another task when the satellite wagon pair is in the storage area for the stacks.

Another aim of the invention is also to provide a new type of storage system for large stacks, wherein in the case of a possible fault situation a satellite wagon can quickly be replaced with another satellite wagon without time-consuming installation and connection procedures and/or wherein one or more satellite wagons can be serviced during production hours without time-consuming installation and connection procedures.

### SUMMARY OF THE INVENTION

The storage system for a factory fabricating particle boards, OSB boards and MDF boards is provided with battery packs, the longitudinal movement and also lifting movement of a satellite wagon pair being achieved by means of the energy stored in said battery packs and that the battery packs are disposed on the satellite wagons. A charging station for the battery packs is arranged on the main wagon.

The invention is as defined in claim 1. The invention is characterized in that one or more replacement stations for battery packs are arranged on the main wagon for replacing the battery packs of the satellite wagons with charged battery packs.

Yet another preferred embodiment of the storage system according to the invention is characterized in that the main wagon has two separate replacement stations for a battery pack, one on both sides of the main wagon, i.e. one for each satellite wagon.

Yet another preferred embodiment of the storage system according to the invention is characterized in that in the battery pack replacement station of the main wagon are two battery packs, which are transferable onto a satellite wagon, or off it, without moving the satellite wagon in its longitudinal direction.

Yet another preferred embodiment of the storage system according to the invention is characterized in that the main wagon and the satellite wagon are provided with an actuator for moving the battery packs from the main wagon to the satellite wagon and *vice versa.*

Yet another preferred embodiment of the storage system according to the invention is characterized in that the actuator is a conveyor belt system comprising two parallel conveyor belts.

One advantage of the invention that can be mentioned is that the capacity of the storage system rises because more than one storage task can be at least partly performed simultaneously.

### LIST OF FIGURES

In the following, the invention will be described in more detail by the aid of some preferred embodiments with reference to the attached drawings, wherein:
- Fig. 1: presents a possible storage system in which the invention is used.
- Fig. 2: presents a main wagon on top of which is a board stack and below which are satellite wagons.
- Fig. 3: presents a magnified detail A of Fig. 2.
- Fig. 4: presents a main wagon and the board stack on top of it.
- Fig. 5: presents a magnification of the detail B of Fig. 4.
- Fig. 6: presents a replacement & charging station for a battery pack.
- Fig. 7: presents a side view of the replacement & charging station for a battery pack according to Fig. 6.

### DETAILED DESCRIPTION OF THE INVENTION

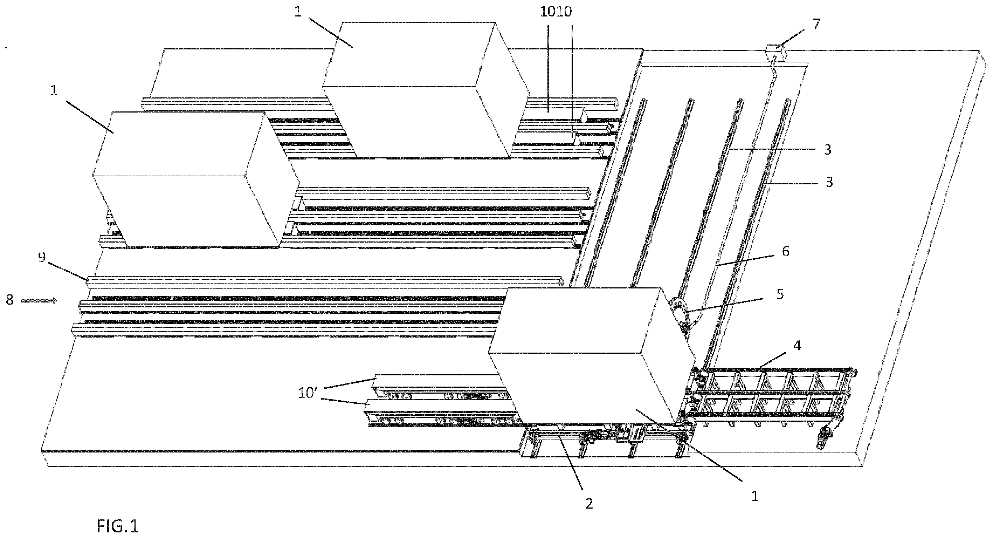

Fig. 1 thus presents an overview of a storage system for a factory fabricating particle boards, OSB boards and MDF boards. The board stacks, of which there are three, are marked with the reference number 1. There can, of course, be more board stacks but for the sake of clarity not all are presented. The board stack at the bottom edge of Fig. 1 is on top of a wagon moving in a crosswise direction, i.e. the main wagon 2. The main wagon moves along rails 3. This direction of movement is therefore called the crosswise direction.

On the right-hand side of the main wagon 2 the figure presents a conveyor 4, along which the board stacks come into the storage and exit it. The current supply of the main wagon current takes place via the cable 6 of the current supply unit 7. When the crosswise wagon moves towards the current supply unit 7, the cable 6 winds onto the cable reel 5. Correspondingly, when the main wagon moves away from the current supply unit 7, the cable 6 unwinds from the cable reel 5.

Fig. 1 presents three longitudinal storage rows 8, each of which is formed from three longitudinal supports 9. There can, of course, be considerably more of these storage rows 8 than three. Additionally, they can be on both sides of the main wagon 2. They are presented here now only on the left-hand side of the main wagon 2 when looking at the figure.

Fig. 1 also presents a wagon pair comprising two wagons 10 moving side-by-side in a longitudinal direction. They are referred to hereinafter as satellite wagons, and they lift and move board stacks from below. Presented in the top part of Fig. 1 is a satellite wagon pair that is just going under or coming away from a stack 1. The satellite wagon pair 10 is able to lift a stack into the air and to transfer it either from the main wagon 2 onto a storage row 8 or from a storage row 8 onto the main wagon 2. A satellite wagon pair 10 is thus disposed in such a way that one satellite wagon is located between the centermost support 9 and one of the outermost supports 9. Correspondingly, the second satellite wagon is located between the centermost support 9 and the other outermost support 9. Therefore, there are always two satellite wagons side by side and they are called a satellite wagon pair 10.

Fig. 1 also presents a second pair of satellite wagons, which can be seen slightly under the stack 1 on the left-hand side. The main wagon 2 can therefore be arranged to serve more than one satellite wagon pair 10. This second satellite wagon pair is not necessarily needed but, particularly in very large storages, it adds capacity. At the bottom edge of Fig. 1 a satellite wagon pair 10' can also be seen, which can be a back-up. In other words, one satellite wagon 10' or both satellite wagons 10' are taken into use from it if a defect occurs in the regular satellite wagons 10 or if they otherwise need servicing. In the storage system according to the invention, commissioning of the replacement satellite wagon 10' is easy without requiring installation work or connection work.

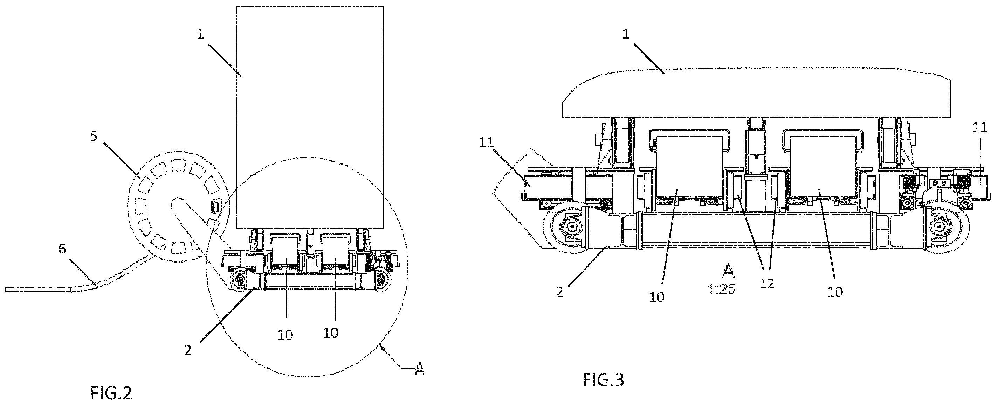

Fig. 2 presents a side view of a main wagon 2. On top of the main wagon is a board stack 1 and below the wagon is a satellite wagon pair 10. When viewing Fig. 2, the main wagon thus moves from left to right and *vice versa,* i.e. in the so-called crosswise direction, and the satellite wagon pair 10, for its part, at a right angle to it, i.e. in the so-called longitudinal direction. Fig. 2 also shows the current supply cable 6 for the main wagon, and the cable reel 5 for the cable.

Fig. 3 presents a magnification of detail A of Fig. 2. The replacement station and charging station for a battery pack is marked with the reference number 11. The battery packs of the satellite wagons are, for their part, marked with the reference number 12. Reference is made herein to a battery pack because in practice it comprises more than one battery. Of course, the number of batteries is not restricted and could also be one. Thus, on both sides of the main wagon 2 are one replacement station and charging station 11 for a battery pack 12, i.e. Fig. 3 shows a replacement station and charging station for a battery pack for the left-hand side as well as a replacement station and charging station for a battery pack for the right-hand side. Thus, each battery pack 12 for a satellite wagon 10 has its own replacement & charging station. The satellite wagons 10 move in their longitudinal direction and perform lifting movements by means of the energy stored in the battery packs. They do not therefore need any external fixed energy supply. When the charge of a battery pack 12 has lowered sufficiently, it is replaced in the battery pack replacement station 11 of the main wagon 2, where the emptied battery pack 12 is in turn charged in the charging station. That being the case, the main wagon 2 takes a satellite wagon pair 10 to a certain storage row 8 and can immediately afterwards move to perform another storage task, moving in a crosswise direction at the same time as the satellite wagon pair 10 performs a storage task on said storage row 8.

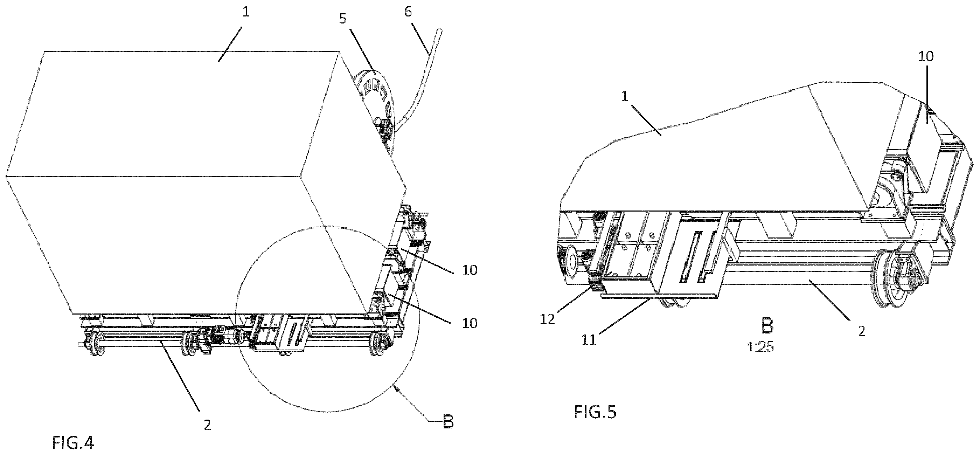

Fig. 4 presents a main wagon 2, on top of which is a board stack 1. Fig. 4 also shows the satellite wagon 10 under the main wagon as well as the current supply cable 6 for the main wagon, and the cable reel 5 for the cable. Fig. 5 thus presents a detail B of Fig. 4. The detail shows one replacement & charging station 11 of a battery pack 12 deployed in a main wagon 2. In the replacement & charging station 11 is an empty space for removing a battery pack from a satellite wagon 10 as well as a fully charged battery pack 12, which correspondingly is transferred onto the satellite wagon 10. On the other side of the main wagon 2 is a similar arrangement for another satellite wagon 10, but the arrangement is not presented in Fig. 5.

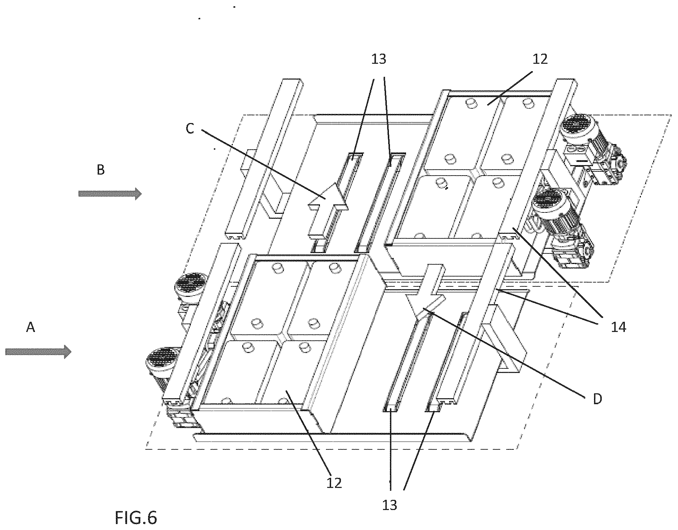

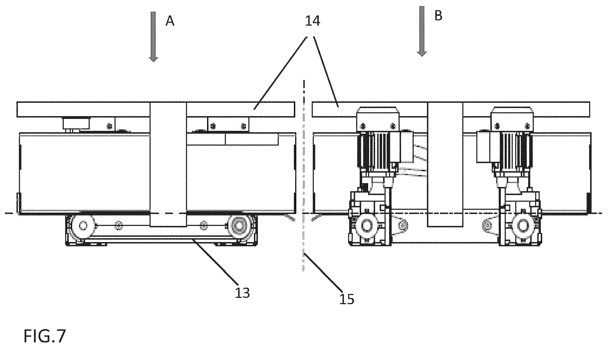

The replacement & charging station for a battery pack 12 is presented in more detail in Figs. 6 and 7. In Fig. 6 the replacement & charging station for a battery pack on the main wagon is marked with the arrow A, and the replacement station for a battery pack on the satellite wagon with the arrow B. The arrow C indicates the transfer of a fully charged battery pack 12 onto a satellite wagon. An actuator, e.g. a conveyor belt system 13, is arranged for the purposes of the transfer, the system comprising two parallel conveyor belts.

Correspondingly, the discharged battery pack 12 on the satellite wagon is transferred into the replacement & charging station on the crosswise wagon in the manner presented by the arrow D. Again the transfer occurs with the conveyor belt system 13. The busbar for a battery pack 12 is marked with the reference number 14. Charging current is supplied to the battery pack 12 on the crosswise wagon side A via the busbar 14 and correspondingly, current is supplied to the battery pack 12 on the satellite wagon side B via the busbar 14 for operating the satellite wagon. The circuits needed for these functions have not been presented in the drawings because they are regarded as being obvious to a person skilled in the art.

Fig. 7 presents a side view of an arrangement for a conveyor belt system 13 and also the busbars 14 for battery packs. The crossover point between the main wagon and the satellite wagon is marked with the reference number 15, i.e. the point where the battery pack transfers from the replacement & charging station marked with the arrow A on the main wagon to the replacement station of the satellite wagon, which in turn is marked with the arrow B.

It is obvious to the person skilled in the art that the invention is not limited to the embodiments presented above, but that it can be varied within the scope of the claims presented below. It is possible to install a conveyor conveying a board stack 1 in the longitudinal direction on the main wagon 2, which conveyor could receive and discharge a board stack in the longitudinal direction without a satellite wagon pair.

## Claims

1. A storage system for storing board stacks (1) for use in factories fabricating boards, the storage system comprising at least one main wagon (2) moving in a crosswise direction and at least one pair of satellite wagons (10) travelling in a longitudinal direction, the satellite wagons of which satellite wagon pair are arranged to move side by side and to carry the board stacks (1) from below, and comprising storage rows (8) that comprise three longitudinal supports (9), from which or onto which storage rows (8) the board stacks (1) are transferred, which storage system is provided with battery packs (12), the longitudinal movement and also lifting movement of a satellite wagon pair (10) being achieved by means of the energy stored in said battery packs, the battery packs (12) being situated on the satellite wagons (10), and on which main wagon (2) a charging station for the battery packs is arranged, **characterized in that** one or more replacement stations (11) for battery packs (12) are arranged on the main wagon (2), for replacing the battery packs (12) of the satellite wagons (10) with charged battery packs (12).

2. A storage system according to claim 1, **characterized in that** the main wagon (2) has two separate replacement stations (11) for a battery pack (12), one on both sides of the main wagon (2), i.e. one replacement station for each satellite wagon.

3. A storage system according to claim 1 or 2, **characterized in that** in the battery pack (12) replacement station of the main wagon (2) are two battery packs (12), which are transferable onto a satellite wagon (10), or off it, without moving the satellite wagon (10) in its longitudinal direction.

## Patentansprüche

1. Lagersystem zum Lagern von Plattenstapeln (1) zur Verwendung in Fabriken, die Platten herstellen, wobei das Lagersystem mindestens einen Hauptwagen (2), der sich in einer Querrichtung bewegt, und mindestens ein Paar Satellitenwagen (10), die sich in einer Längsrichtung fortbewegen, umfasst, wobei die Satellitenwagen des Satellitenwagenpaars so angeordnet sind, dass sie sich nebeneinander bewegen und die Plattenstapel (1) von unten tragen, und umfassend
Lagerreihen (8), die drei Längsträger (9) umfassen, wobei die Plattenstapel (1) von diesen oder auf diese Lagerreihen (8) transferiert werden, wobei das Lagersystem mit Batteriepackungen (12) versehen ist, wobei die Längsbewegung und auch die Hubbewegung eines Satellitenwagenpaars (10) mittels der in den Batteriepackungen gespeicherten Energie erfolgt, wobei sich die Batteriepackungen (12) auf den Satellitenwagen (10) befinden und wobei an dem Hauptwagen (2) eine Ladestation für die Batteriepackungen angeordnet ist, **dadurch gekennzeichnet, dass** an dem Hauptwagen (2) eine oder mehrere Wechselstationen (11) für Batteriepackungen (12) angeordnet sind, um die Batteriepackungen (12) der Satellitenwagen (10) durch geladene Batteriepackungen (12) zu ersetzen.

2. Lagersystem nach Anspruch 1, **dadurch gekennzeichnet, dass** der Hauptwagen (2) zwei separate Wechselstationen (11) für eine Batteriepackung (12) aufweist, eine auf beiden Seiten des Hauptwagens (2), d. h. eine Wechselstation für jeden Satellitenwagen.

3. Lagersystem nach Anspruch 1 oder 2, **dadurch**
**gekennzeichnet, dass** sich in der Batteriepackungs-(12)-Wechselstation des Hauptwagens (2) zwei Batteriepackungen (12) befinden, die auf einen Satellitenwagen (10) oder von diesem weg transferierbar sind, ohne den Satellitenwagen (10) in seiner Längsrichtung zu bewegen.

## Revendications

1. Système de stockage pour stocker des piles de panneaux (1) destiné à être utilisé dans des usines de fabrication de panneaux, le système de stockage comprenant au moins un chariot principal (2) se mettant en mouvement dans une direction transversale et au moins une paire de chariots satellites (10) se déplaçant dans une direction longitudinale, les chariots satellites de laquelle paire de chariots satellites sont agencés pour se mettre en mouvement côte à côte et pour porter les piles de panneaux (1) par le dessous, et comprenant
des rangées de stockage (8) qui comprennent trois supports longitudinaux (9), à partir desquelles ou sur lesquelles rangées de stockage (8) les piles de panneaux (1) sont transférées, lequel système de stockage est muni de blocs-batteries (12), le mouvement longitudinal et également le mouvement de levage d'une paire de chariots satellites (10) étant réalisés au moyen de l'énergie stockée dans lesdits blocs-batteries, les blocs-batteries (12) étant situés sur les chariots satellites (10), et sur lequel chariot principal (2) est agencée une station de chargement pour les blocs-batteries, **caractérisé en ce qu'**une ou plusieurs stations de remplacement (11) pour les blocs-batteries (12) sont agencées sur le chariot principal (2), pour remplacer les blocs-batteries (12) des chariots satellites (10) par des blocs-batteries (12) chargés.

2. Système de stockage selon la revendication 1,
**caractérisé en ce que** le chariot principal (2) comporte deux stations de remplacement (11) séparées pour un bloc-batterie (12), une sur les deux côtés du chariot principal (2), c'est-à-dire une station de remplacement pour chaque chariot satellite.

3. Système de stockage selon la revendication 1 ou 2, **caractérisé en ce que** dans la station de remplacement de blocs-batteries (12) du chariot principal (2) se trouvent deux blocs-batteries (12), qui peuvent être transférés sur un chariot satellite (10), ou hors de celui-ci, sans mettre en mouvement le chariot satellite (10) dans sa direction longitudinale.
